Europäisches Patentamt

European Patent Office

Office européen des brevets

(11) Veröffentlichungsnummer: **0 264 466**
**B1**

(12) **EUROPÄISCHE PATENTSCHRIFT**

(45) Veröffentlichungstag der Patentschrift:
08.08.90

(21) Anmeldenummer: **86114419.4**

(22) Anmeldetag: **17.10.86**

(51) Int. Cl.⁵: **F16K 51/02**, F16K 41/10

(54) **Ventil mit Faltenbalg.**

(43) Veröffentlichungstag der Anmeldung:
**27.04.88 Patentblatt 88/17**

(45) Bekanntmachung des Hinweises auf die Patenterteilung:
**08.08.90 Patentblatt 90/32**

(84) Benannte Vertragsstaaten:
**CH DE FR GB LI**

(56) Entgegenhaltungen:
**EP-A- 0 173 115**
**DE-A- 2 438 553**
**US-A- 4 163 563**

(73) Patentinhaber: **LEYBOLD AKTIENGESELLSCHAFT,
Bonner Strasse 498, D-5000 Köln 51(DE)**

(72) Erfinder: **Contzen, Franz-Peter, Erlenweg 69,
D-5000 Köln 30(DE)**
Erfinder: **Mühlhoff, Martin, Decksteiner Strasse 1a,
D-5000 Köln 41(DE)**
Erfinder: **Tuschwitz, Peter, Bergstrasse 13,
D-5206 Neunkirchen-Seelscheid(DE)**

(74) Vertreter: **Leineweber, Jürgen, Dipl.-Phys.,
Nagelschmiedshütte 8, D-5000 Köln 40(DE)**

## Beschreibung

Die Erfindung bezieht sich auf ein Vakuumventil mit einem Faltenbalg aus Stahl, vorzugsweise Edelstahl.

Ventile sind häufig mit einem Faltenbalg ausgerüstet, der den Ventilstempel konzentrisch umgibt und der mit dem Ventilteller und dem Gehäuse verschweißt ist (z.B. DE-A 2 438 553).Die wesentliche Funktion des Faltenbalges ist die dichte Trennung des Ventilinnenraumes vom Ventilgehäuse und damit nach außen. Bei Ventilen für korrosive Medien sowie insbesondere bei Vakuumventilen ist diese Trennung von besonderer Bedeutung. Aus Gründen der Korrosionsfestigkeit bestehen die Bälge in der Regel aus Edelstahl.

Vielfach werden Ventile der beschriebenen Art mit pneumatischen, hydraulischen oder elektromagnetischen Antrieben ausgerüstet und in Vorrichtungen oder Anlagen eingebaut, in denen sie - vorzugsweise automatisch - betätigt werden. Da die Standzeit der Ventile begrenzt ist, ist es zur Vermeidung unerwünschter Störungen erforderlich, diese rechtzeitig auszuwechseln. Das Auswechseln muß umso häufiger geschehen, je höher die Ventil-Betätigungsrate ist.

Das die Standzeit der Ventile wesentlich bestimmende Element ist erfahrungsgemäß der Faltenbalg. Nach einer bestimmten Anzahl von Betätigungen treten am Balg Brüche auf, die das Ventil unbrauchbar machen.

Der Erfindung liegt die Aufgabe zugrunde, ein Ventil der eingangs genannten Art derart zu verbessern, daß es wesentlich höhere Standzeiten hat, d. h. daß wesentlich mehr Betätigungsspiele möglich werden.

Erfindungsgemäß wird diese Aufgabe dadurch gelöst, daß dem Faltenbalg ein Reibungskörper zur Dämpfung von nach einer Betätigung des Ventils auftretenden Schwingung anliegt.

Diese Maßnahme beruht auf der Erkenntnis, daß der Balg selbst durch eine Betätigung des Ventils zu Schwingungen angeregt und nach der Betätigung mit seiner Eigenfrequenz nachschwingt. Insbesondere dann, wenn schnelle Betätigungseinrichtungen, zum Beispiel Elektromagnete, verwendet werden, schwingt der Balg nach einer Ventilbetätigung mehrere Sekunden mit seiner Eigenfrequenz (typisch einige Hundert Hertz) nach. Da zumindest jede der in der ersten Phase des Nachschwingens ausgeführte Schwingbewegung des Balges einer Betätigungsbewegung des Ventilstempels gleichzusetzen ist, wird der Faltenbalg bei jeder tatsächlich durchgeführten Ventilbetätigung so belastet, als würden viele Hundert Ventilbetätigungsspiele durchgeführt. Infolge dieser hohen Balgbelastung treten bereits nach einer begrenzten Anzahl von tatsächlich durchgeführten Ventilbetätigungen Resonanz- oder Ermüdungsbrüche auf.

Durch die Anwendung der erfindungsgemäßen Schwingungsdämpfung wird das Nachschwingen des Balges mit seiner Eigenfrequenz nach einer Ventilbetätigung drastisch reduziert, so daß die Belastung des Balges durch Nachschwingungen im wesentlichen entfällt. Dauerversuche werden gezeigt, daß bei einem mit der erfindungsgemäßen Schwingungsdämpfung ausgerüsteten Ventil die Anzahl der Ventilbetätigungen derart gesteigert werden kann, daß nicht mehr der Faltenbalg das die Standzeit der Ventile wesentlich bestimmende Element ist.

Aus der US-A 4 163 563 ist es zwar an sich bekannt, daß Schwingungen die Lebensdauer eines Faltenbalges beeinträchtigen; Gegenstand der genannten US-Schrift ist jedoch ein gemeinsam mit einer Welle rotierender Faltenbalg, der die Aufgabe hat, ständig eine axiale Kraft auszuüben, die für eine axiale Richtung zwischen einem rotierenden und einem ruhenden Bauteil erforderlich ist. Um unkontrollierte, durch die Rotationsbewegung verursachte Schwingungen/Vibrationen und damit störende Einflüsse auf die axiale Dichtkraft zu vermeiden, ist ein dem Faltenbalg von innen anliegender, mitrotierender Federring vorgesehen, dessen Umfang mit steigender Drehzahl aufgrund der Zentrifugalkraft zunimmt. Infolge dieser Eigenschaften des Federringes werden radiale Schwingungen/Vibrationen um so besser gedämpft, je schneller die Welle rotiert. Im übrigen ist die Anordnung so getroffen, daß Reibungserscheinungen zwischen dem Faltenbalg und dem Federring weitestgehend vermieden werden sollen.

Im Gegensatz zum Stand der Technik sollen axiale (nicht radiale) Nachschwingungen des Faltenbalges, welche nach jeder Ventilbetätigung auftreten, gerade durch Reibung gedämpft werden. Zur Erzielung dieser Schwingungsdänpfung durch Reibung liegen dem Balg zweckmäßigerweise ein oder mehrere Reibungskörper von innen oder außen an, wobei die Reibungskörper die unterschiedlichste Gestalt haben können. Wesentlich ist nur, daß der oder die Reibungskörper dem Faltenbalg derart anliegen, daß ein die Betätigung des Ventiles selbst nur unwesentlich, das Nachschwingen des Faltenbalges jedoch wesentlich beeinflussender Reibungswiderstand vorhanden ist.

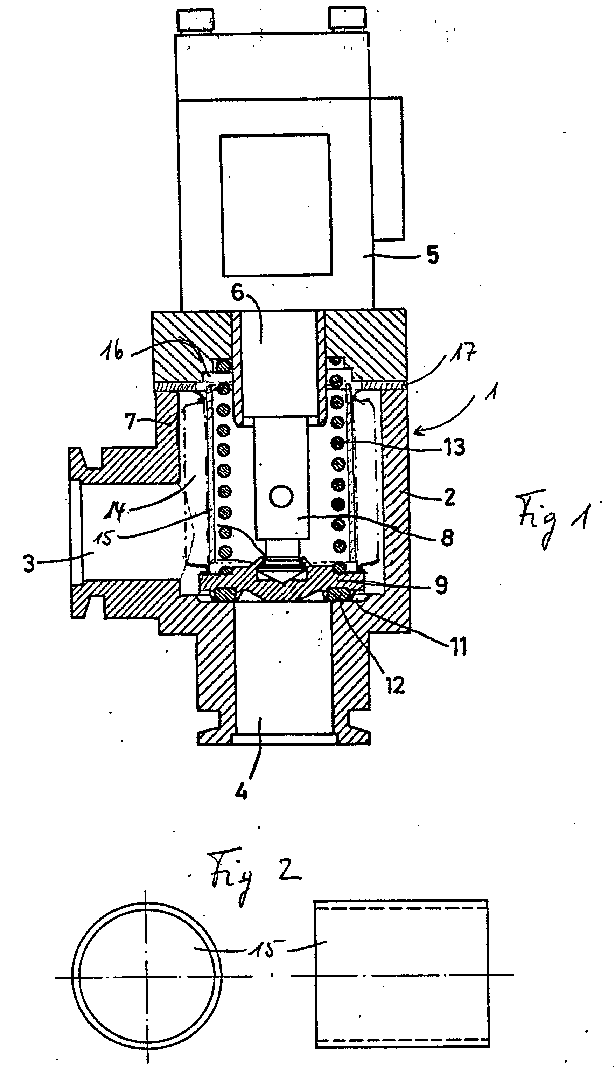

Weitere Vorteile und Einzelheiten der Erfindung sollen anhand von in den Figuren 1 bis 7 dargestellten Ausführungsbeispielen erläutert werden.

In Fig. 1 ist ein Magnetventil 1 dargestellt. Es umfaßt das Gehäuse 2 mit den Anschlußöffnungen 3 und 4 sowie den generell mit 5 bezeichneten Magnetantrieb. Der nur teilweise dargestellte Anker 6 des Magnetantriebs 5 erstreckt sich bis in den Ventilinnenraum 7 und ist mit dem Ventilstempel 8 verbunden. Dieser trägt an seinem freien Ende den Ventilteller 9. Der Ventilteller 9 ist der Anschlußöffnung 4 zugeordnet, die von einem Ventilsitz 11 umgeben ist. Auf der dem Ventilsitz 11 zugewandten Seite weist der Ventilteller 9 einen Dichtring 12 auf, der im dargestellten geschlossenen Zustand des Ventils dem Sitz 11 anliegt. Der Erzeugung der erforderlichen Dichtkraft dient die Spiralfeder 13, die sich zwischen dem Teller 9 und dem oberen Gehäuseteil 2 erstreckt.

Zur dichten Trennung des Innenraumes des Ventils von den Betätigungseinrichtungen 5, 6 und nach außen ist der Faltenbalg 14 vorgesehen, der sich im wesentlichen konzentrisch zum Ventilstempel 8 und zur Spiralfeder 13 erstreckt. Er ist mit dem Ventilteller 9 und mit einem oberen Ring 17 verschweißt, der zwischen zwei Gehäuseteilen eingeklemmt ist. Die Eigenschaften des Balges sind so gewählt, daß er die Bewegung des Ventiltellers zwischen seiner Offen- und seiner Schließstellung möglichst ungehindert zuläßt.

Dem Faltenbalg von innen zugeordnet ist der Reibungskörper 15, der dem Faltenbalg 14 mit einer solchen Kraft anliegt, daß ein Reibungswiderstand entsteht. Bei dem in Figur 1 dargestellten Ausführungsbeispiel ist der Reibungskörper 15 als im wesentlichen zylindrischer Schlauchabschnitt ausgebildet, dessen Höhe derart gewählt ist, daß er die Bewegungen des Ventiltellers 9 nicht behindert. Dazu ist im Oberteil des Gehäuses 2 eine Aussparung 16 vorgesehen, die dem schlauchförmigen Reibungskörper 15 den notwendigen Bewegungsspielraum läßt.

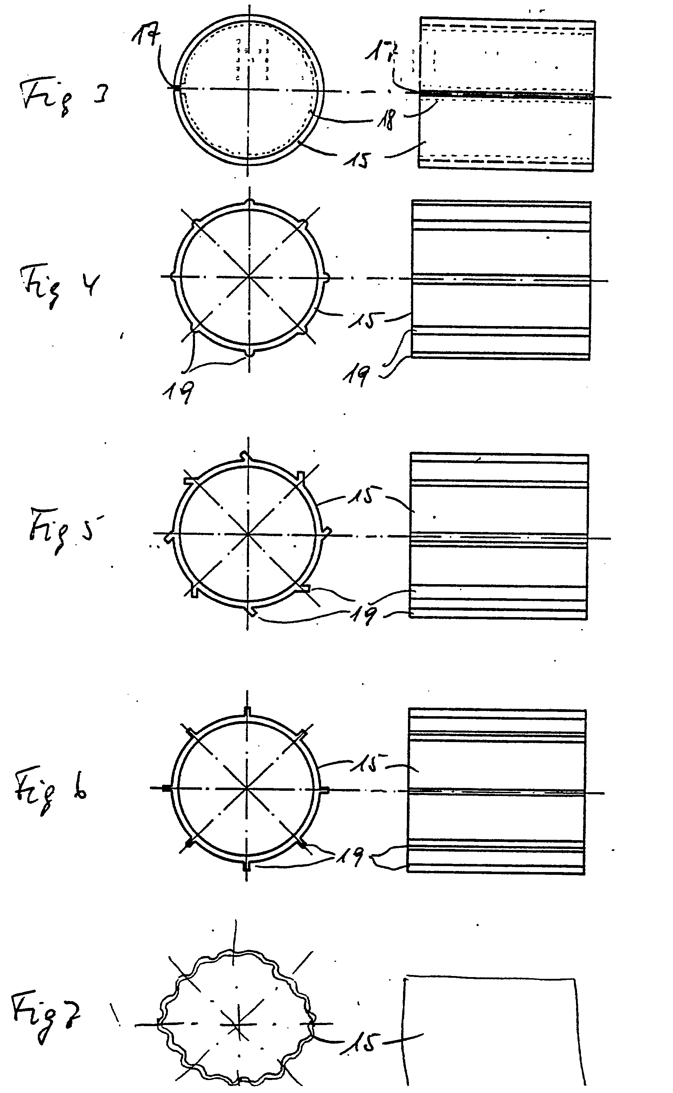

Die Figuren 2 bis 7 zeigen beispielhaft verschiedene Ausführungsformen für den Reibungskörper 15.

Nach der Darstellung nach Figur 2 ist er als einfacher Schlauchabschnitt ausgebildet.

Figur 3 zeigt einen mit einem Längsschlitz 17 versehenen Schlauchabschnitt, dem von innen ein (oder auch mehrere) federnder Stahlring 18 anliegt. Dieser übt auf den Reibungskörper 15 eine Kraft aus, die bestrebt ist, den Spalt 17 zu vergrößern. Eine Ausführung dieser Art ermöglicht es, zum einen Toleranzen des dem Reibungskörper 15 von außen anliegenden Faltenbalgs auszugleichen und zum anderen definierte und den Haftreibungswiderstand bestimmende Kräfte zu erzeugen.

Die Figuren 4 bis 6 zeigen zylinderförmige Reibungskörper 15, deren Außenseite mit verschiedenen, sich parallel zur Zylinderachse erstreckenden Vorsprüngen 19 ausgerüstet sind. Insbesondere die streifenförmigen Vorsprünge 19 nach Figur 5, die sich unter einem Winkel von ca. 45° zu Radialebenen erstrecken, haben sich als zweckmäßig erwiesen. Die geneigt angeordneten, streifenförmigen Vorsprünge 19 ermöglichen einen Toleranzausgleich bei einem im wesentlichen gleichbleibenden Reibungswiderstand.

Beim Ausführungsbeispiel nach Figur 7 ist der Reibungskörper 15 als parallel zur Längsachse gewellter Schlauchabschnitt gestaltet.

Die in den Figuren 3 bis 6 dargestellten Reibungskörper 15 sind sämtlich dazu bestimmt, einem zu dämpfenden Faltenbalg 14 von innen anzuliegen. Soll der Faltenbalg 14 durch einen Reibungskörper 15 gedämpft werden, der ihm von außen anliegt, dann sind die Vorsprünge 19 jeweils auf der Innenseite des Reibungskörpers 15 vorzusehen. Bei einer dem Ausführungsbeispiel nach Figur 3 entsprechenden Ausführungsform liegt in diesem Fall der Federring 18 dem längs geschlitzten schlauchförmigen Reibungskörper 15 von außen an und übt eine Kraft aus, die bestrebt ist, den Längsschlitz 17 zu verkleinern.

Als Werkstoff für den Reibungskörper 15 kommt zweckmäßigerweise ein Elastomer in Frage. Nach Dauerversuchen hat sich ergeben, daß der Dichtungswerkstoff Viton (Vitilan) besonders geeignet ist.

## Patentansprüche

1. Vakuumventil mit einem Faltenbalg aus Stahl, vorzugsweise Edelstahl, dadurch gekennzeichnet, daß dem Balg (14) ein Reibungskörper (15) zur Dämpfung von nach einer Betätigung des Ventils (1) auftretenden Schwingungen anliegt.

2. Ventil nach Anspruch 1, dadurch gekennzeichnet, daß der Reibungskörper (15) dem Balg von innen anliegt.

3. Ventil nach Anspruch 1 oder 2, dadurch gekennzeichnet, daß der Reibungskörper ein im wesentlichen zylindrischer Schlauchabschnitt (15) ist.

4. Ventil nach Anspruch 3, dadurch gekennzeichnet, daß der den Reibungskörper (15) bildende Schlauchabschnitt einen Längsschlitz (17) aufweist.

5. Ventil nach Anspruch 4, dadurch gekennzeichnet, daß dem längs geschlitzten Schlauchabschnitt (15) auf der dem Faltenbalg (14) abgewandten Seite ein oder mehrere Federringe (18) anliegen.

6. Ventil nach einem der Ansprüche 3, 4 oder 5, dadurch gekennzeichnet, daß der von einem Schlauchabschnitt gebildete Reibungskörper (15) auf der dem Faltenbalg anliegenden Seite mit Vorsprüngen (19) ausgerüstet ist.

7. Ventil nach Anspruch 6, dadurch gekennzeichnet, daß sich die Vorsprünge (19) im wesentlichen parallel zur Längsachse erstrecken.

8. Ventil nach Anspruch 7, dadurch gekennzeichnet, daß die Vorsprünge (19) streifenförmig ausgebildet und zu Radialebenen geneigt angeordnet sind, um einen Toleranzausgleich zu ermöglichen.

9. Ventil nach einem der Ansprüche 3 bis 8, dadurch gekennzeichnet, daß der den Reibungskörper (15) bildende Schlauchabschnitt parallel zur Längsachse gewellt ist.

10. Ventil nach einem der vorhergehenden Ansprüche, dadurch gekennzeichnet, daß es mit einem Magnetantrieb (5, 6) ausgerüstet ist.

11. Ventil nach einem der vorhergehenden Ansprüche, dadurch gekennzeichnet, daß der Reibungskörper (15) aus einem Elastomer besteht.

12. Ventil nach einem der Ansprüche 1 bis 10, dadurch gekennzeichnet, daß der Reibungskörper (15) aus einem Dichtwerkstoff, vorzugsweise Viton, besteht.

## Claims

1. Vacuum valve with a bellows made of steel, preferably special steel, characterised in that a friction member (15) for damping any oscillations occurring after the valve (1) has been actuated bears against the bellows (14).

2. Valve according to claim 1, characterised in that the friction member (15) bears from inside against the bellows.

3. Valve according to claim 1 or 2, characterised in that the friction member is an essentially cylindrical tube section (15).

4. Valve according to claim 3, characterised in that the tube section forming the friction member (15) comprises an elongate slot (17).

5. Valve according to claim 4, characterised in that one or a plurality of spring rings (18) bear(s) against the longitudinally slotted tube section (15) on the side which is distant from the bellows (14).

6. Valve according to one of claims 3, 4 and 5, characterised in that the friction member (15), which is formed by a tube section, is provided with projections (19) on the side which bears against the bellows.

7. Valve according to claim 6, characterised in that the projections (19) extend essentially parallel to the longitudinal axis.

8. Valve according to claim 7, characterised in that the projections (19) are striplike and inclined towards radial planes, so as to enable tolerances to be compensated.

9. Valve according to one of claims 3 to 8, characterised in that the tube section forming the friction member (15) is corrugated parallel to the longitudinal axis.

10. Valve according to one of the preceding claims, characterised in that it is provided with a magnetic drive (5, 6).

11. Valve according to one of the preceding claims, characterised in that the friction member (15) consists of an elastomer.

12. Valve according to one of claims 1 to 10, characterised in that the friction member (15) consists of a sealing material, preferably Viton.

**Revendications**

1. Soupape à vide munie d'un soufflet plissé en acier, de préférence en acier inoxydable, caractérisée en ce qu'un corps de friction (15) est appuyé contre le soufflet (14) pour amortir les oscillations qui se produisent après la manœuvre de la soupape (1).

2. Soupape selon la revendication 1, caractérisée en ce que le corps de friction (15) est appuyé de l'intérieur contre le soufflet.

3. Soupape selon la revendication 1 ou 2, caractérisée en ce que le corps de friction est un tronçon de tuyau (15) sensiblement cylindrique.

4. Soupape selon la revendication 3, caractérisée en ce que le segment de tuyau formant le corps de friction (15) présente une fente longitudinale (17).

5. Soupape selon la revendication 4, caractérisée en ce qu'une ou plusieurs bagues élastiques (18) est ou sont appuyée(s) sur le tronçon de tuyau (15) fendu longitudinalement, sur la surface de ce tuyau qui est la plus éloignée du soufflet plissé (14).

6. Soupape selon une des revendications 3, 4 et 5, caractérisée en ce que le corps de friction (15), formé d'un tronçon de tuyau est muni de saillies (19) sur la face qui est appuyée contre le soufflet plissé.

7. Soupape selon la revendication 6, caractérisée en ce que les saillies (19) s'étendent sensiblement parallèlement à l'axe longitudinal.

8. Soupape selon la revendication 7, caractérisée en ce que les saillies (19) présentent la forme de bandes et sont inclinées par rapport à des plans radiaux, pour assurer la compensation des tolérances.

9. Soupape selon une des revendications 3 à 8, caractérisée en ce que le tronçon de tuyau formant le corps de friction (15) est ondulé parallèlement à l'axe longitudinal.

10. Soupape selon une des revendications précédentes, caractérisée en ce qu'elle est équipée d'un entraînement électromagnétique (5, 6).

11. Soupape selon une des revendications précédentes, caractérisée en ce que le corps de friction (15) est fait d'un élastomère.

12. Soupape selon une des revendications 1 à 10, caractérisée en ce que le corps de friction (15) est composé d'une matière pour joints, de préférence de Viton.

Fig 1

Fig 2

Fig 3

Fig 4

Fig 5

Fig 6

Fig 7